# EUROPEAN PATENT SPECIFICATION

(11) **EP 3 686 031 B1**
(45) Date of publication and mention of the grant of the patent: **30.03.2022**
(21) Application number: 20151221.7
(22) Date of filing: 10.01.2020
(51) Int. Cl.: B60C 1/00, C08L 9/06

(54) **RUBBER COMPOSITION CONTAINING A SPECIALIZED STYRENE/BUTADIENE ELASTOMER, VEGETABLE OIL AND A TRACTION RESIN**
KAUTSCHUKZUSAMMENSETZUNG, DIE EIN SPEZIALISIERTES STYROL-/BUTADIEN-ELASTOMER, PFLANZENÖL UND EIN ZUGHARZ ENTHÄLT
COMPOSITION DE CAOUTCHOUC CONTENANT UN ÉLASTOMÈRE DE STYRÈNE/BUTADIÈNE SPÉCIALISÉ, DE L'HUILE VÉGÉTALE ET DE LA RÉSINE DE TRACTION

(30) Priority: 23.01.2019 US 201916254885
(43) Date of publication of application: 29.07.2020
(73) Proprietor: The Goodyear Tire & Rubber Company, Akron, OH 44316 (US)
(72) Inventor: BRACE, Lauren Elizabeth, Chagrin Falls, OH 44023 (US); GULAS, Brad Stephen, Fairlawn, OH 44333 (US); DENNIS-PELCHER, Kate Elizabeth, Uniontown, OH 44685 (US)
(74) Representative: Kutsch, Bernd

(56) References cited:
- EP-A1- 3 109 066
- EP-A1- 3 323 632

## Description

### Field of the Invention

The invention relates to a rubber composition and to a tire having a component, particularly a circumferential tread, with such a rubber composition containing silica, preferably precipitated silica reinforcement, a vegetable oil, a specialized styrene/butadiene elastomer having a molecular weight profile containing a limited low molecular weight content and a traction promoting resin.

### Background of the Invention

Tires are sometimes provided with one or more components, such as a tread, of a rubber composition comprising at least one conjugated diene-based elastomer which includes a styrene/butadiene elastomer for which the rubber composition contains a significant reinforcing filler content comprising primarily of precipitated silica.

The styrene/butadiene elastomer may, for example, be a functionalized styrene/butadiene elastomer containing functional groups reactive with hydroxyl groups contained on the precipitated silica.

However, it is desired to evaluate the use of a specialized styrene/butadiene elastomer preferably without containing functional groups reactive with hydroxyl groups on the silica where the specialized styrene/butadiene elastomer has a molecular weight profile restricted to having a low molecular weight content limited to a maximum of six percent of weight average molecular weight (Mw) of up to 150,000 for a silica reinforced rubber composition.

For such evaluation, such rubber composition containing the specialized styrene/butadiene elastomer contains rubber processing oil comprising preferably freely added triglyceride vegetable oil (rubber processing oil added to the rubber composition).

Representative of such triglyceride vegetable oils are, for example, soybean oil, sunflower oil, rapeseed oil, particularly soybean oil.

In one embodiment, the rubber composition also contains a petroleum based rubber processing oil. The petroleum based rubber processing oil may be a freely added oil and/or a rubber extending oil (rubber extending oil is an oil added to the elastomer itself at the elastomer production facility).

It is additionally desired, for such evaluation, to provide such rubber composition with at least one traction promoting resin.

While the mechanism might not be fully understood, it is theorized that the presence of a restrictive low molecular weight content in a styrene/butadiene elastomer can promote absorbing greater energy within the elastomer. Such energy absorption may thereby contribute to promoting a higher hysteresis of the cured rubber composition, as may be evidenced by one or more of its increased rebound and reduced tangent delta physical properties, and thereby promote higher heat generation within the rubber composition, or tire component, during tire service. It is envisioned that, however, a lower content of low molecular weight portion of the elastomer might beneficially promote less internal heat generation within the rubber composition during its dynamic use and an associated beneficial reduction in the rubber composition's hysteresis. Therefore, the aforesaid evaluation is to be undertaken.

In the description of this invention, terms such as "compounded rubber", "rubber compound" and "compound", if used herein, refer to rubber compositions containing elastomers blended with various ingredients, including curatives such as sulfur and cure accelerators. The terms "elastomer" and "rubber" may be used herein interchangeably unless otherwise indicated.

Molecular weight refers to the true molecular weight in g/mol of a polymer (copolymer or block of a copolymer).

Polydispersity index or polydispersity is the ratio of Mw/Mn, i.e. the ratio of the weight average molecular weight to the number average molecular weight.

Gel permeation chromatography (GPC) is a well-known method wherein polymers are separated according to molecular size, the largest molecule eluting first. The fraction of chains existing as mono chains is determined as the ratio of the areas under the GPC curve, i.e., (mono chain peak area)/(total area).

The term cis 1,4-polybutadiene or cis 1,4-polyisoprene refers to a cis-content of the respective polymer of at least 90 percent, preferably at least 92 percent or at least 95 percent.

The glass transition temperature Tg for polymers is determined as a peak midpoint by a differential scanning calorimeter (DSC) at a temperature rate of increase of 10°C per minute, according to ASTM D3418 or equivalent. The glass transition temperature Tg for resins is determined as a peak midpoint by a differential scanning calorimeter (DSC) at a temperature rate of increase of 10°C per minute, according to ASTM D6604 or equivalent. The glass transition temperature Tg for oils is determined as a peak midpoint by a differential scanning calorimeter (DSC) at a temperature rate of increase of 10°C per minute, according to ASTM E1356 or equivalent.

### Disclosure and Practice of the Invention

The invention relates to a rubber composition in accordance with claim 1 and to a tire, preferably a pneumatic tire, in accordance with claim 15.

Dependent claims refer to preferred embodiments of the invention.

Preferably, 60 to 80 phr of the styrene/butadiene elastomer with the defined molecular weight profile is used.

Preferably, the rubber composition comprises 40 to 20 phr of the at least one additional conjugated diene-based elastomer.

Preferably, the rubber composition comprises 40 to 140 phr of the filler.

Preferably, the rubber composition comprises 9 to 40 phr of the resin.

Preferably, the rubber composition comprises 15 to 55 or 9 to 40 phr of the at least one rubber processing oil comprising at least one triglyceride vegetable oil.

In accordance with a preferred aspect of the invention, a pneumatic rubber tire is provided having a component of a rubber composition containing, based on parts by weight per 100 parts by weight of the rubber (phr),
(A) conjugated diene-based elastomers comprising:
   (1) 40 to 90, alternately 60 to 80 phr (such alternative range is therefore a majority of the elastomers) of a specialized styrene/butadiene elastomer having a molecular weight profile comprising a weight average molecular weight (Mw) in a range of from 500,000 to 800,000 with a low molecular weight content limited to a maximum of six, alternately to a maximum of 5.5, percent (weight percent) of said styrene/butadiene elastomer having a number average molecular weight (Mw) of up to 150,000, (for example such limited (restrictive) molecular weight content may have a number average molecular weight within a range of from 100 to 150,000), and
   (2) 60 to 10, alternately 40 to 20, phr (such an alternate range is therefore a minority of the elastomers) of at least one additional conjugated diene-based elastomer,
(B) 40 to 160, alternately 40 to 140, phr of a reinforcing filler comprising a combination of rubber reinforcing carbon black and precipitated silica (e.g. where the reinforcing filler contains from 10 to 99.5, alternately 50 to 96, weight percent precipitated silica and from 0.5 to 90 (alternately 4 to 50) weight percent rubber reinforcing carbon black, alternately contains at least 100 phr of precipitated silica and limited to containing up to 15, alternately up to 5, such as for example from 1 to 15, phr of rubber reinforcing carbon back) wherein a coupling agent is provided for said precipitated silica having a moiety reactive or interactive with hydroxyl groups (e.g. silanol groups) on said precipitated silica and another different moiety reactive or interactive with said diene-based elastomers,
(C) 5 to 70, alternately 9 to 40, phr of a traction promoting resin, and
(D) 9 to 55, alternately 15 to 55 or 9 to 40 phr, of at least one rubber processing oil comprising at least one triglyceride vegetable oil. For example, said triglyceride vegetable oil may be or comprise at least one of soybean oil, sunflower oil and rapeseed oil, particularly soybean oil.

In a preferred embodiment, said triglyceride vegetable oil is a freely added rubber processing oil.

In a preferred embodiment said rubber composition contains a combination of such triglyceride vegetable rubber processing oil and at least one petroleum based rubber processing oil. Such petroleum based rubber processing oil may be a rubber extension oil (to provide, for example, an oil extended specialized styrene/butadiene rubber) or a freely added oil to the rubber composition. Representative of such petroleum based rubber processing oils are, for example, at least one of naphthenic, paraffinic and aromatic oils or their combination.

In one embodiment, said rubber composition contains an additional precipitated silica added without additional silica coupler.

In one embodiment, said rubber composition contains an additional silica coupler without additionally added precipitated silica.

In one embodiment, said coupling agent is or comprises an alkoxyorganomercaptosilane or an bis(3-triethoxysilylpropyl) polysulfide having an average of from 2 to 4 connecting sulfur atoms in its polysulfidic bridge.

The bis(3-triethioxysilylpropyl) polysulfide may have, for an example, an average of from 2 to 2.6 or 3 to 4 (e.g. 3.4 to 3.8), connecting sulfur atoms in its polysulfidic bridge.

In one embodiment, said precipitated silica and coupling agent are provided as a composite of said precipitated silica pre-treated (pre-hydrophobated) with said coupling agent prior to addition thereof to the rubber composition. In such embodiment, said coupling agent may desirably be, for example, said alkoxyorganomercaptosilane.

In one embodiment, said precipitated silica and coupling agent are provided with said rubber composition to thereby provide in situ treatment of (reaction with) said precipitated silica within said rubber composition (instead of being pre-reacted to form a composite before addition to the rubber composition). In such embodiment for such in situ treated precipitated silica, said coupling agent may desirably be, for example, said bis (3-triethoxysilylpropyl) polysulfide.

In one embodiment, particularly where the rubber composition contains a high content of at least 100 phr of precipitated silica as the reinforcing filler, usually with a minimal rubber reinforcing carbon black of an amount of up to 15, usually up to 10 and optionally only up to 5 or 6 phr, a significant amount of rubber processing oil is used, namely at least one of said petroleum based and triglyceride vegetable oil or mixtures thereof. For example, US-B-7,335,692 refers to rubber processing oil as a plasticizer for rubber compositions, presumably as plasticizers for uncured (unvulcanized) rubber compositions. In practice, it is usually desired for this application that other materials said to be useful as rubber plasticizers such as, for example, trioctyl phosphate and compositions based on synthetic diglyceridal fatty acids, are not used.

In addition, thermoplastic traction promoting resins for rubber compositions might sometimes also be referred to as a plasticizer in a sense of assisting the processing of uncured rubber compositions

For this rubber composition, in one embodiment the total of such combination of rubber processing oil and thermoplastic traction promoting resin in the rubber composition may be at amount of greater than 50 phr.

In another embodiment, such total may be provided in a an amount of up to 50 phr such as, for example, in a range of from 40 to 49 or even to 50 phr.

In further accordance with this invention said rubber composition is provided as a sulfur cured (sulfur vulcanized) rubber composition.

In one embodiment, the said specialized styrene/butadiene elastomer and conventional styrene/butadiene elastomers (organic solvent solution polymerization prepared elastomers) have similar ranges of Tg's such as for example a range of from 20 to 30°C (e.g. 23°C).

In one embodiment, said styrene/butadiene elastomer having the specified molecular weight profile has a heterogeneity index (Mw/Mn) in a range of from 1.5/1 to 1.8/1.

The aforesaid molecular weight characterization of the styrene/butadiene elastomer is done according to ASTM D4001-13 and carried out using an Agilent 1260 GPC (gel permeation chromatography) system equipped with an Agilent 1260 VWD ultraviolet detector, and Wyatt Technology Light Scattering, Viscosity, and Refractive index detectors with tetrahydrofuran as the mobile phase.

Preferably, the tire component is a tire tread.

Suitable rubber reinforcing carbon blacks may be found, for example, in The Vanderbilt Rubber Handbook, (1990), 13th edition, Pages 416 through 419.

In one embodiment, said additional conjugated diene-based elastomers are, for example, elastomers comprising at least one of isoprene and 1,3-butadiene and of styrene and at least one of isoprene and 1,3-butadiene.

Representative of such additional conjugated diene-based elastomers may be, for example, at least one of cis 1,4-polybutadiene, cis 1,4-polyisoprene, 3,4-polyisoprene and additional, conventional styrene/butadiene elastomers other than, or in addition to, said specialized styrene/butadiene elastomer having said limited molecular distribution (molecular weight profile). Said additional elastomers, including said specialized styrene/butadiene elastomer, are preferably exclusive of elastomers containing functional groups reactive with hydroxyl groups on said silica or precipitated silica.

The aforesaid specialized or additional conventional styrene/butadiene elastomer is preferably tin or silicon coupled, more desirably tin coupled, to form a star-branched elastomer whereby its molecular weight is significantly increased.

The specialized styrene/butadiene elastomer with the specified molecular weight profile comprising the restricted low molecular weight content preferably has a bound styrene content in a range of from 10 to 40 weight percent. It (based on its polybutadiene portion) preferably has a vinyl 1,2-content in a range of from 10 to 60 percent of its isometric content (percent of the isomers).

For tin coupling of any of the styrene/butadiene elastomers, various organo tin compounds, may be used. Representative of such compounds are alkyl tin trichloride, dialkyl tin dichloride, yielding variants of a tin coupled styrene/butadiene copolymer elastomer.

The silica filler is preferably a synthetic amorphous silica such as a precipitated silica obtained by the acidification of a soluble silica silicate (e.g., sodium silicate or a co-precipitation of a silicate and an aluminate). Representative of precipitated silica for use in this invention includes Zeosil 1165MP and 200MP from Solvay, Hi-Sil 135G-D and 233 from PPG Industries, EZ160G-D from PPG Industries, Zeopol 8755LS from Huber, and Ultrasil VN 2 GR from Evonik. Representative of pre-treated (pre-hydrophobated) precipitated silica is, for example, Agilon 400^{™} from PPG Industries.

Representative examples of resins are styrene-alphamethylstyrene resin, coumarone-indene resin, petroleum hydrocarbon resin, terpene polymer resin, terpene phenol resin, rosin derived resin, including gum rosin, and copolymers thereof and phenol formaldehyde resins, including octylphenol formaldehyde.

In a preferred embodiment, the resin is a styrene/alphamethylstyrene resin. Such styrene/alphamethylstyrene resin may be, a relatively short chain copolymer of styrene and alphamethylstyrene. In one embodiment, such a resin may be suitably prepared by cationic copolymerization of styrene and alphamethylstyrene in a hydrocarbon solvent. The styrene/alphamethylstyrene resin preferably has a styrene content in a range of from 10 to 90 weight percent. The styrene/alphamethylstyrene resin preferably has a softening point in a range of from 60°C to 125°C, alternately from 80°C to 90°C (ASTM E28). It may be referred to as having a Tg of at least 20°C, although it is considered herein to more desirably refer to a traction promoting resin by its softening point range.

A suitable styrene/alphamethylstyrene resin is, for example, Resin 2336^{™} from Eastman or Sylvares SA85^{™} from Arizona Chemical.

In one embodiment, the resin is a coumarone-indene resin. Such coumarone-indene resin preferably has a softening point, in a range of from 60°C to 150°C containing coumarone and indene as the monomer components making up the resin skeleton (main chain). Minor amounts of monomers other than coumarone and indene may be incorporated into the skeleton such as, for example, methyl coumarone, styrene, alphamethylstyrene, methylindene, vinyltoluene, dicyclopentadiene, cycopentadiene, and diolefins such as isoprene and piperlyene.

In one embodiment, the resin is a petroleum hydrocarbon resin. Such petroleum hydrocarbon resin may be, for example, an aromatic and/or nonaromatic (e.g. paraffinic) based resin. Various petroleum resins are available. Some petroleum hydrocarbon resins have a low degree of unsaturation and high aromatic content, whereas some are highly unsaturated and yet some contain no aromatic structure at all. Differences in the resins are largely due to the olefins contained in the petroleum based feedstock from which the resins are derived. Conventional olefins for such resins include any C5 olefins (olefins and diolefines containing an average of five carbon atoms) such as, for example, cyclopentadiene, dicyclopentadiene, isoprene and piperylene, and any C9 olefins (olefins and diolefins containing an average of 9 carbon atoms) such as, for example, vinyltoluene and alphamethylstyrene. Such resins may be made from mixtures of such C5 and C9 olefins.

In one preferred embodiment, said resin is a terpene resin. Such resin may comprise, for example, polymers of at least one of limonene, alpha pinene and beta pinene and preferably have a softening point in a range of from 60°C to 160°C.

In one embodiment, the resin is a terpene-phenol resin. Such terpene-phenol resin may be, for example, a copolymer of phenolic monomer with a terpene such as, for example, limonene and pinene.

In one embodiment, the resin is a resin derived from rosin and derivatives. Representative thereof are, for example, gum rosin and wood rosin. Gum rosin and wood rosin have similar compositions, although the amount of components of the rosins may vary. Such resins may be in the form of esters of rosin acids and polyols such as pentaerythritol or glycol.

In one embodiment, said rosin may be partially or fully hydrogenated.

In one embodiment, the resin is a phenol formaldehyde resin, such as, for example, octylphenol formaldehyde. Such resin preferably has a softening point in a range of from 60 to 95°C (e.g. 75 to 92°C)

The precipitated silica reinforcement may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037. Such precipitated silicas may, for example, also be characterized by having a dibutylphthalate (DBP) absorption value, for example, in a range of 100 to 400, and more usually 150 to 300 cc/100g.

It is readily understood by those having skill in the art that the rubber compositions of the tread would be compounded with conventional compounding ingredients including the aforesaid reinforcing fillers such as carbon black and precipitated silica, as hereinbefore described, as well as antidegradant(s), processing oils, fatty acid comprised of, for example, stearic, oleic and palmitic acids and zinc oxide.

Processing aids may be used, for example, waxes such as microcrystalline and paraffinic waxes, in a range, for example, of 1 to 5 phr or 1 to 3 phr; and resins, usually as tackifiers, such as, for example, synthetic hydrocarbon and natural resins in a range of, for example, 1 to 5 phr or 1 to 3 phr. A curative might be classified as sulfur together with one or more sulfur cure accelerator(s). In a sulfur and accelerator(s) curative, the amount of sulfur used may be, for example, from 0.5 to 5 phr, more usually in a range of 0.5 to 3 phr; and the accelerator(s), often of the sulfenamide type, is (are) used in a range of 0.5 to 5 phr, often in a range of 1 to 2 phr. The ingredients, including the elastomers but exclusive of sulfur and accelerator curatives, are normally first mixed together in a series of at least two sequential mixing stages, although sometimes one mixing stage might be used, to a temperature in a range of, for example, 145°C to 185°C, and such mixing stages are typically referred to as non-productive mixing stages. Thereafter, the sulfur and accelerators, and possibly one or more retarders and possibly one or more antidegradants, are mixed therewith to a temperature of, for example, 90°C to 120°C and is typically referred to as a productive mix stage. Such mixing procedure is well known to those having skill in such art.

After mixing, the compounded rubber can be fabricated such as, for example, by extrusion through a suitable die to form a tire tread. The tire tread is then typically built onto a sulfur curable tire carcass and the assembly thereof cured in a suitable mold under conditions of elevated temperature and pressure by methods well-known to those having skill in such art.

The invention may be better understood by reference to the following example in which the parts and percentages are by weight unless otherwise indicated.

### EXAMPLE I

This example illustrates production of a specialized styrene-butadiene rubber. A 15 percent monomer solution in hexanes (premix) is prepared by mixing styrene and 1,3-butadiene at a weight ratio of 30/70. The premix is then dried over desiccant such silica gel, alumina or molecular sieves. Polymerization is carried out in a two reactor process where the premix, initiator and modifier are continuously fed to the first reactor. Typical loading of initiator is 0.025 phm n-butyl lithium and typical loading of modifier is 0.1 phm 2,2-di(2-tetrahydrofuryl)propane (DTP). Polymerization is typically out at 60°C and a total residence time of 90 minutes. A gel inhibitor (1,2-butadiene) is also added continuously at 60 ppm (based on total monomer). Polymerization is terminated with 1 phr stearic acid and stabilized with 0.5 phr Polystay K antioxidant. Typical properties for the specialized styrene/butadiene rubber are a bound styrene content of 30 percent by weight, a vinyl content of 41 percent by weight and a molecular weight profile comprising an overall weight average molecular weight (Mw) of 535,000 with only four percent thereof having a weight average molecular weight (Mw) of up to 150,000 and a heterogeneity (polydispersity) index (Mw/Mn), weight average molecular weight to number average molecular weight, of 1.5/1.

### EXAMPLE II

Rubber compositions were prepared to evaluate various styrene/butadiene elastomers for use with precipitated silica together with traction (tire tread traction) promoting resin and vegetable oil. The precipitated silica and coupling agent are reacted together in situ within the rubber composition.

Comparative rubber Sample A is presented for comparative purposes only on a basis that its styrene/butadiene is a functionalized elastomer identified herein as "functionalized styrene/butadiene rubber (A1)" together with precipitated silica reinforcement and traction promoting resin.

Control rubber Sample B contained a conventional, non-functionalized styrene/butadiene rubber (A2) having a molecular weight profile comprised of a weight average molecular weight (Mw) of 650,000 with 7.5 percent thereof having a weight average molecular weight (Mw) of less than 150,000, together with precipitated silica and traction promoting resin.

Comparative rubber Sample C and Experimental rubber Sample D contained a non-functionalized specialized styrene/butadiene rubber having a molecular weight profile comprising a weight average molecular weight (Mw) of 535,000 (experimental styrene/butadiene rubber B1) with less than 4 percent thereof having a weight average molecular weight (Mw) of less than 150,000, together with precipitated silica and traction promoting resin.

Both Samples C and D contained extender petroleum based processing oil introduced into the elastomer at its manufacturing plant.

Comparative rubber Sample C also contained petroleum based processing oil freely added to the rubber composition.

Experimental rubber Sample D also contained soybean oil (a vegetable processing oil) freely added to the rubber composition instead of the freely added petroleum based processing oil of Comparative rubber Sample C.

A summary of the rubber Sample formulations is illustrated in the following Table 1 which is presented in terms of parts per 100 parts by weight of rubber (phr).

As previously indicated, the rubber compositions may be prepared by mixing the elastomers(s) without sulfur and sulfur cure accelerators in a first non-productive mixing stage (NP-1) in an internal rubber mixer for 4 minutes to a temperature of 160°C. If desired, the rubber mixture may then be mixed in a second non-productive mixing stage (NP2) in an internal rubber mixer for 4 minutes to a temperature of 160°C while adding additional ingredients if desired. The resulting rubber mixture may then be mixed in a productive mixing stage (PR) in an internal rubber mixer with sulfur and sulfur cure accelerator(s) for 2 minutes to a temperature of 110°C. The rubber composition may be sheeted out and cooled to below 50°C between each of the non-productive mixing steps and prior to the productive mixing step. Such rubber mixing procedure is well known to those having skill in such art.

**Table 1**

| Non-Productive Mixing Step (NP) - Mixed to 160°C | Parts (phr) |
|---|---|
| Cis 1,4-polybutadiene rubber¹ | 30 |
| Comparative functionalized styrene/butadiene SBR elastomer A1^{2,} | 0 and 70 |
| Control conventional styrene/butadiene SBR elastomer A2³ | 0 and 70 |
| Specialized styrene/butadiene rubber B1⁴ | 0 and 70 |
| Petroleum based extending oil contained in control and specialized SBR | 0, 26, 14 |
| Freely added petroleum based oil contained in comparative and control SBRs⁵ | 30, 9.8 |
| Freely added soybean oil for specialized SBR-containing rubber composition | 0.22 |
| Precipitated silica⁶ | 110 |
| Silica coupling agent⁷ | 9 |
| Traction promoting resin⁸ | 15 |
| Fatty acid⁹ | 3 |
| Rubber reinforcing carbon black¹⁰ | 5 |
| Zinc oxide | 1.8 |
| Wax, microcrystalline and/or paraffinic | 2 |
| Antioxidant(s) | 3 |

| Productive Mixing Step (PR) - Mixed to 110°C | |
|---|---|
| Sulfur | 1 |
| Accelerator(s)¹¹ | 5.5 |

| | |
|---|---|
| ¹Cis-1,4-polybutadiene rubber as BUD1207 from The Goodyear Tire and Rubber Company having a Tg of -105°C ²Comparataive organic solvent solution polymerization derived functionalized styrene/butadiene rubber (S-SBR-A1) as Sprintan SLR4602 from Trinseo having a bound styrene content of 21 weight percent and vinyl-1,2-content of 62 percent apparently containing aa combination of siloxy and thiol groups groups reactive with hydroxyl groups on said precipitated silica ³Control organic solvent solution polymerization derived styrene/butadiene (S-SBR-A2) as Solflex 30H41 from The Goodyear Tire and Rubber Company having a bound styrene content of 30 weight percent and vinyl content of 41 percent, a weight average molecular weight (Mw) of 650,000 with 7.5 percent thereof having a weight average Mw of less than 150,000 and a heterogeneity (polydispersity) index (Mw/Mn) of 1.8/1. The elastomer was petroleum oil extended with 37.5 parts by weight oil per 100 parts by weight of the elastomer and is reported in the Table in parts by weight of the elastomer. ⁴Specialized organic solvent solution polymerization derived styrene/butadiene rubber (specialized SSBR) having a bound styrene of 30 weight percent and vinyl content of 41 percent and a molecular weight profile comprised of an overall weight average molecular weight (Mw) of 535,000 with only four percent thereof having a weight average Mw of up to 150,000 and a heterogeneity (polydispersity) index (Mw/Mn) of 1.49/1. The elastomer was petroleum oil extended with 20 parts by weight oil per 100 parts by weight of the elastomer and is reported in the Table in parts by weight of the elastomer. The specialized SSBR was made following the procedure of Example 1. ⁵Freely added soybean oil as Cargill Master Chef Soybean Oil 22393 ⁶Precipitated silica as Zeosil 1165^{™} from Solvay ⁷Silica coupling agent as Si266^{™} from Evonik as bis(3-triethoxysilylpropyl) polysulfide having an average of from 2 to 2.6 connecting sulfur atoms in its polysulfidic bridge ⁸Traction promoting resin as styrene/alphamethylstyrene resin having a softening point of 86°C and a Tg of 26°C as Impera P1504^{™} from Eastman ⁹Fatty acid comprised of stearic, palmitic and oleic acids ¹⁰Rubber reinforcing carbon black as N330, an ASTM characterization ¹¹Sulfenamide and diphenyl guanidine sulfur cure accelerators | |

The following Table 2 represents the uncured and cure behavior and various physical properties of the rubber compositions. Test samples were cured for 14 minutes at 160°C.

**Table 2**

| | | Samples | | |
|---|---|---|---|---|
| | | Control | | Experimental |
| | A | B | C | D |
| Cis 1,4-polybutadiene rubber | 30 | 30 | 30 | 30 |
| Control (comparative) functionalized SBR A1 | 70 | 0 | 0 | 0 |
| Control (conventional) styrene/butadiene rubber A2 | 0 | 70 | 0 | 0 |
| Specialized (non-functionalized) styrene/butadiene rubber B1 | 0 | 0 | 70 | 70 |
| Precipitated silica | 110 | 110 | 110 | 110 |
| Petroleum extender oil | 0 | 26.3 | 14 | 14 |
| Freely added petroleum oil | 30 | 9.8 | 22 | 0 |
| Freely added soybean oil | 0 | 0 | 0 | 22 |
| Traction promoting resin | 15 | 15 | 15 | 15 |

| Properties | | | | |
|---|---|---|---|---|
| Rubber processing indication (RPA¹), uncured storage modulus G', 15% strain 0.83 Hertz, 100°C (MPa) | 0.25 | 0.20 | 0.22 | 0.22 |
| Rubber stiffness indication (RPA¹), cured storage modulus G' at 1 % strain, 1 Hertz, 100°C, MPa (higher is better) | 3.67 | 3.42 | 3.56 | 3.28 |

| Rubber Hysteresis Indication | | | | |
|---|---|---|---|---|
| Tan delta at 10% strain, 1 Hertz, 100°C (lower is better) | 0.159 | 0.166 | 0.167 | 0.177 |
| Rebound (Zwick), 100°C, % (higher is better) | 53.4 | 49.6 | 51.1 | 48.9 |

| Predictive Low Temperature Performance (ARES²) (lower is better) | | | | |
|---|---|---|---|---|
| Cured storage modulus G' at -20°C, 3% strain, 10 Hz (MPa) | 3.98E7 | 8.56E7 | 5.59E7 | 2.74E7 |

| Predictive Wet Traction Performance (ARES²) (hiqher is better) | | | | |
|---|---|---|---|---|
| Cured tan delta at 0°C, 3% strain, 10 Hz | 0.59 | 0.71 | 0.64 | 0.55 |

| Rubber Abrasion Resistance Indication⁴ | | | | |
|---|---|---|---|---|
| DIN abrasion relative volume loss (lower is better) | 86.5 | 108 | 97 | 91 |
| MDR³ test; 60 minutes at 150°C | | | | |
| Delta torque (dN-m) | 16.3 | 14.8 | 15.3 | 13.6 |
| T90 (minutes) | 21.3 | 21.3 | 21.4 | 18.4 |
| T25 (minutes) | 10.9 | 11.0 | 11.3 | 9.9 |

| Stress-strain Properties | | | | |
|---|---|---|---|---|
| Tensile strength (MPa) | 15.7 | 15.4 | 15.9 | 15.9 |
| Elongation at break (%) | 450 | 574 | 630 | 696 |
| 300% modulus, (MPa) | 9.5 | 6.8 | 6.1 | 5.6 |
| Toughness = (tensile strength x elongation/ | | | | |
| 300% modulus) (higher is tougher) | 741 | 1304 | 1640 | 1993 |

From Table 2 it is observed that:

### (A) Uncured Rubber Sample Processing

The use of a functionalized SSBR in silica-filled Comparative rubber Sample A resulted in a higher uncured G' storage modulus (0.25 MPa), probably because of the functional group reacting with the silica reinforcement, than that of Control rubber Sample B (0.20 MPa), which contained a conventional non-functionalized SSBR.

For silica-filled Samples C and D containing the specialized styrene/butadiene rubber (specialized SSBR) with its specialized molecular weight profile, the uncured G' storage modulus values of 0.22 MPa for both of Comparative Sample C with the freely petroleum based processing oil and Experimental Sample D with the freely added vegetable oil (soybean oil) were greater than the uncured G' storage modulus value of Control rubber Sample B of 0.20 MPa based on a conventional styrene/butadiene rubber. This is an indication that the inclusion of the specialized styrene/butadiene rubbers in the rubber Samples C and D with their molecular weight profiles containing significantly reduced low molecular weight content increased the energy needed for processing the rubber Samples because of the associated greater higher molecular weight content compared to a more conventional styrene/butadiene rubber. However, the uncured G' storage modulus values of Samples C and D (0.22 MPa) were still lower than that of Comparative rubber Sample A of 0.25 MPa which was based on containing a functionalized SSBR together with freely added petroleum-based processing oil. This is considered to be a significant discovery of being able to provide the rubber composition with beneficial processing characteristic without the functionalized SSBR.

While the discovered result of inclusion of the specialized styrene/butadiene elastomer is not entirely understood, it is envisioned that the reduction in the lower molecular weight content of the styrene/butadiene elastomer increased the proportional content of the higher molecular weight molecule of the elastomer profile so that their polymer chain entanglements within the elastomers becomes a greater factor and promotes a higher storage modulus G' for the uncured elastomers and rubber compositions.

### (B) Predictive Cold Weather, Wet Traction, and Treadwear Performances

(1) The storage modulus (G') at -20°C for a cured rubber composition is used an indicator of cold weather performance for a tire tread. Lower values are considered better for cold weather (e.g. with snow conditions performance for a tire tread of such rubber composition.

It is seen in Table 2 that cured Experimental silica-reinforced rubber Samples C and D containing the specialized styrene/butadiene rubber with its molecular weight profile, reported a cured G' storage modulus value measured at -20°C of 5.59E7 MPa for cured Comparative rubber Sample C containing freely added petroleum based processing oil and a beneficially significantly reduced value of 2.74E7 MPa at -20°C for Experimental rubber Sample D where freely added soybean oil replaced the freely added petroleum based oil of rubber Sample C. Additionally, the storage modulus (G') for Comparative rubber Sample C was greater than the storage modulus (G') value of 3.98E7 MPa for Comparative rubber Sample A but less than the storage modulus (G') value of 8.56E7 for Control rubber Sample B. However, the storage modulus (G') for Experimental rubber Sample D (containing the free added soybean oil) was beneficially significantly lower than for Comparative rubber Sample C as well as for Comparative and Control rubber Samples A and B.

It is concluded that, with lower values of storage modulus G' (at -20°C) considered as being better for predictive cold weather performance for a tire having a tread of such rubber composition that:
(a) Comparative rubber Sample C with the specialized styrene/butadiene elastomer containing the freely added petroleum-based processing oil exhibited a reduced predictive cold weather performance (snow performance) in a sense of lower stiffness at -20°C of 5.59E7 compared to Comparative rubber Sample A with its stiffness value of 3.98E7.
(b) Experimental rubber Sample D with the specialized styrene/butadiene elastomer containing the freely added soybean oil exhibited a significantly and beneficially reduced storage modulus (G'), and therefore a significantly improved predictive cold weather performance in a sense of stiffness at -20°C of 2.74E7 compared to Comparative rubber Sample C and also compared to both of Comparative and Control rubber Samples A and B.

Therefore, it is concluded that it was discovered that the inclusion of the freely added soybean oil for Experimental rubber Sample D enabled the Comparative rubber composition C containing the specialized styrene/butadiene rubber with its specialized molecular weight profile to achieve a beneficially improved predictive cold weather performance property.

(2) The tangent delta (tan delta) value at 0°C is used as an indicator of wet traction performance for rubber composition for a tire tread. Higher values are considered better for predictive wet traction performance for a tire tread of such rubber composition.

From Table 2, it is seen that for cured Comparative rubber Sample C and Experimental rubber Sample D containing the specialized styrene/butadiene rubber with its molecular weight profile, where Experimental rubber Sample D also contained the freely added soybean oil, their tan delta values at -20°C of 0.64 and 0.55, respectively, were higher and lower than Comparative Sample A, which had a tan delta value of 0.59. However, the tan delta values for Comparative rubber Sample C and Experimental rubber Sample D were both lower than the tan delta value of Control rubber Sample B containing the conventional styrene/butadiene rubber.

Therefore, it is concluded that it has been discovered that the inclusion of the freely added soybean oil of Experimental rubber Sample D enabled the specialized styrene/butadiene elastomer containing rubber Sample C to achieve a beneficially improved predictive cold weather performance with a smaller percent detriment to predictive wet traction performance for a tire read of such rubber composition.

(3) The DIN abrasion relative volume loss is used as an indicator of treadwear performance. Lower values are considered better for predictive beneficial treadwear resistance and therefore extended tread life (sometimes referred to as treadwear performance) for a tire tread of such rubber composition.

It is concluded that, with lower values of the relative volume loss, based on the laboratory DIN abrasion test, which is considered as being better for predictive treadwear performance for a tire having a tread of such rubber composition that:
(a) Comparative rubber Sample C and Experimental rubber Sample D exhibited a reduced predictive treadwear performance compared to Comparative rubber Sample A but an improved predictive treadwear performance compared to Control rubber Sample B containing the conventional styrene/butadiene rubber.
(b) Experimental rubber Sample D containing the freely added soybean oil in addition to the specialized styrene/butadiene elastomer exhibited a significantly and beneficially reduced relative volume loss, and therefore an improved predictive treadwear performance compared to Comparative rubber Sample C with its freely added petroleum-based processing oil as well as Control rubber Sample B containing the conventional styrene/butadiene rubber.

Therefore, it is concluded that it has been discovered that the inclusion of the freely added soybean oil of Experimental rubber Sample D enabled the specialized styrene/butadiene elastomer containing rubber Sample C to achieve a beneficially improved predictive treadwear performance as compared to both of Control rubber Sample B (containing the conventional styrene/butadiene rubber) and Comparative rubber Sample C.

## Claims

1. A rubber composition containing, based on parts by weight per 100 parts by weight of the rubber (phr),
(A) conjugated diene-based elastomers comprising:
(1) 40 to 90 phr of a styrene/butadiene elastomer having a molecular weight profile with an overall weight average molecular weight (Mw) in a range of from 500,000 to 800,000 and with the lower end of the molecular weight profile having a weight average molecular weight (Mw) of up to 150,000 being limited to a maximum of six weight percent of the styrene/butadiene elastomer;
(2) 60 to 10 phr of at least one additional conjugated diene-based elastomer;
(B) 40 to 200 phr, alternatively 40 to 160 phr, of a filler comprising a combination of carbon black and silica, preferably precipitated silica, together with a coupling agent having a moiety reactive or interactive with hydroxyl or silanol groups on said silica and another different moiety reactive or interactive with at least one of said diene-based elastomers;
(C) 5 to 70 phr of a resin; and
(D) 9 to 55 phr, alternatively 15 to 55 phr, of a rubber processing oil comprising at least one triglyceride vegetable oil.

2. The rubber composition of claim 1 wherein the filler comprises from 10 to 99.5 weight percent of silica or precipitated silica and from 0.5 to 90 weight percent of carbon black.

3. The rubber composition of claim 1 or 2 wherein the filler comprises at least 100 phr of silica or precipitated silica and/or up to 15 phr or less than 8 phr of carbon black.

4. The rubber composition of at least one of the previous claims wherein the total of the resin and the rubber processing oil is greater than 50 phr.

5. The rubber composition of at least one of the previous claims containing 9 to 40 phr of the resin and 9 to 40 phr of the rubber processing oil and wherein the total of the resin and the rubber processing oil is preferably less than 50 phr.

6. The rubber composition of at least one of the previous claims wherein the rubber processing oil comprises a combination of freely added triglyceride vegetable oil and at least one of freely added petroleum-based rubber processing oil and petroleum-based rubber processing oil extended specialized styrene/butadiene elastomer.

7. The rubber composition of at least one of the previous claims wherein the triglyceride vegetable oil is or comprises at least one of soybean oil, sunflower oil, and rapeseed oil.

8. The rubber composition of at least one of the previous claims wherein the coupling agent is or comprises an alkoxyorganomercaptosilane or bis(3-triethoxysilylpropyl) polysulfide having an average of from 2 to 4 connecting sulfur atoms in its polysulfidic bridge.

9. The rubber composition of at least one of the previous claims wherein the silica and the coupling agent are provided as a composite of the silica pre-treated with the coupling agent prior to addition thereof to the rubber composition or wherein the silica and the coupling agent are provided with the rubber composition to provide an in situ treated silica with the coupling agent within the rubber composition.

10. The rubber composition of at least one of the previous claims wherein the additional conjugated diene-based elastomer is at least one of cis 1,4-polybutadiene, cis 1,4-polyisoprene, 3,4-polyisoprene and an additional styrene/butadiene elastomer other than the styrene/butadiene elastomer having said molecular weight profile.

11. The rubber composition of at least one of the previous claims wherein the styrene/butadiene elastomer having said molecular weight profile is tin or silicon coupled or wherein at least one of the additional conjugated diene-based elastomer and the styrene/butadiene elastomer having said molecular weight profile is tin or silicon coupled.

12. The rubber composition of at least one of the previous claims wherein the lower end of the molecular weight profile having a weight average molecular weight (Mw) of up to 150,000 is limited to a maximum of 5.5 weight percent of said styrene/butadiene elastomer.

13. The rubber composition of at least one of the previous claims wherein the resin is or comprises at least one of styrene-alphamethylstyrene resin, coumarone-indene resin, petroleum hydrocarbon resin, terpene polymer resin, terpene phenol resin, rosin derived resin, including gum rosin, and copolymers and phenol formaldehyde resin, including octylphenol formaldehyde.

14. The rubber composition of at least one of the previous claims wherein the rubber composition is sulfur cured.

15. A tire having a component, preferably a circumferential tread, said component comprising the rubber composition in accordance with at least one of the previous claims.

## Patentansprüche

1. Kautschukzusammensetzung, die basierend auf Gewichtsteilen pro 100 Gewichtsteilen Kautschuk (phr) Folgendes enthält
(A) konjugierte Elastomere auf Dienbasis, die Folgendes umfassen:
(1) 40 bis 90 phr eines Styrol/Butadien-Elastomers, das ein Molekularmassenprofil mit einem Massenmittel (Mw) in einem Bereich von 500.000 bis 800.000 aufweist und wobei das untere Ende des Molekularmassenprofils ein Massenmittel (Mw) von bis zu 150.000, begrenzt auf ein Maximum von sechs Gew.-% des Styrol/Butadien-Elastomers, aufweist;
(2) 60 bis 10 phr wenigstens eines zusätzlichen konjugierten Elastomers auf Dienbasis;
(B) 40 bis 200 phr, alternativ 40 bis 160 phr, eines Füllstoffs, der eine Kombination von Industrieruß und Siliciumdioxid, vorzugsweise ausgefälltem Siliciumdioxid, zusammen mit einem Haftvermittler umfasst, der ein Molekülteil, das mit Hydroxyl- oder Silanolgruppen an dem Siliciumdioxid reagiert oder wechselwirkt, und ein weiteres anderes Molekülteil aufweist, das mit wenigstens einem der Elastomere auf Dienbasis reagiert oder wechselwirkt;
(C) 5 bis 70 phr eines Harzes, und
(D) 9 bis 55 phr, alternativ 15 bis 55 phr, eines Kautschukverarbeitungsöls, das wenigstens ein Triglycerid-Pflanzenöl umfasst.

2. Kautschukzusammensetzung nach Anspruch 1, wobei der Füllstoff von 10 bis 99,5 Gew.-% Siliciumdioxid oder ausgefälltes Siliciumdioxid und von 0,5 bis 90 Gew.-% Industrieruß umfasst.

3. Kautschukzusammensetzung nach Anspruch 1 oder 2, wobei der Füllstoff wenigstens 100 phr Siliciumdioxid oder ausgefälltes Siliciumdioxid und/oder bis zu 15 phr oder weniger als 8 phr Industrieruß umfasst.

4. Kautschukzusammensetzung nach wenigstens einem der vorhergehenden Ansprüche, wobei die Gesamtmenge des Harzes und des Kautschukverarbeitungsöls mehr als 50 phr beträgt.

5. Kautschukzusammensetzung nach wenigstens einem der vorhergehenden Ansprüche, die 9 bis 40 phr des Harzes und 9 bis 40 phr des Kautschukverarbeitungsöls enthält und wobei die Gesamtmenge des Harzes und des Kautschukverarbeitungsöls vorzugsweise weniger als 50 phr beträgt.

6. Kautschukzusammensetzung nach wenigstens einem der vorhergehenden Ansprüche, wobei das Kautschukverarbeitungsöl eine Kombination von frei zugesetztem Triglycerid-Pflanzenöl und von frei zugesetztem Kautschukverarbeitungsöl auf Erdölbasis und/oder Kautschukverarbeitungsöl auf Erdölbasis mit verlängertem spezialisiertem Styrol/Butadien-Elastomer umfasst.

7. Kautschukzusammensetzung nach wenigstens einem der vorhergehenden Ansprüche, wobei das Triglycerid-Pflanzenöl Sojabohnenöl, Sonnenblumenöl und/oder Rapsöl ist oder umfasst.

8. Kautschukzusammensetzung nach wenigstens einem der vorhergehenden Ansprüche, wobei der Haftvermittler ein Alkoxyorganomercaptosilan oder Bis(3-triethoxysilylpropyl)polysulfid, das einen Durchschnitt von 2 bis 4 verbindende Sulfuratome in seiner Polysulfidbrücke aufweist, ist oder umfasst.

9. Kautschukzusammensetzung nach wenigstens einem der vorhergehenden Ansprüche, wobei das Siliciumdioxid und der Haftvermittler als ein Verbundstoff des mit dem Haftvermittler vorbehandelten Siliciumdioxid vor dessen Zusetzen zu der Kautschukzusammensetzung bereitgestellt werden oder wobei das Siliciumdioxid und der Haftvermittler mit der Kautschukzusammensetzung versehen sind, um ein in situ behandeltes Siliciumdioxid mit dem Haftvermittler innerhalb der Kautschukzusammensetzung bereitzustellen.

10. Kautschukzusammensetzung nach wenigstens einem der vorhergehenden Ansprüche, wobei das zusätzliche konjugierte Elastomer auf Dienbasis cis-1,4-Polybutadien, cis-1,4-Polyisopren, 3,4-Polyisopren und/oder ein zusätzliches Styrol/Butadien-Elastomer außer das Styrol/Butadien-Elastomer, das das Molekularmassenprofil aufweist, ist.

11. Kautschukzusammensetzung nach wenigstens einem der vorhergehenden Ansprüche, wobei das Styrol/Butadien-Elastomer, das das Molekularmassenprofil aufweist, zinn- oder silikongekoppelt ist oder wobei das zusätzliche konjugierte Elastomer auf Dienbasis und/oder das Styrol/Butadien-Elastomer, das das Molekularmassenprofil aufweist, zinn- oder silikongekoppelt ist.

12. Kautschukzusammensetzung nach wenigstens einem der vorhergehenden Ansprüche, wobei das untere Ende des Molekularmassenprofils, das ein Massenmittel (Mw) von bis zu 150.000 aufweist, auf ein Maximum von 5,5 Gew.-% des Styrol/Butadien-Elastomers begrenzt ist.

13. Kautschukzusammensetzung nach wenigstens einem der vorhergehenden Ansprüche, wobei das Harz Styrolalphamethylstyrolharz, Cumaronindenharz, Erdölkohlenwasserstoffharz, Terpenpolymerharz, Terpenphenolharz, von Kolophonium abstammendes Harz, einschließlich Balsamkolophonium, und/oder Copolymere und Phenolformaldehydharz, einschließlich Octylphenolformaldehyd, ist oder umfasst.

14. Kautschukzusammensetzung nach wenigstens einem der vorhergehenden Ansprüche, wobei die Kautschukzusammensetzung schwefelgehärtet ist.

15. Reifen, der eine Komponente aufweist, vorzugsweise eine Umfangslauffläche, wobei die Komponente die Kautschukzusammensetzung nach wenigstens einem der vorhergehenden Ansprüche umfasst.

## Revendications

1. Composition de caoutchouc qui contient, en se basant sur des parties en poids par 100 parties en poids du caoutchouc (phr) :
(A) des élastomères à base de diènes conjugués, qui comprennent :
(1) de 40 à 90 phr d'un élastomère de styrène/butadiène qui possède un profil du poids moléculaire avec un poids moléculaire moyen en poids global (Mw) qui se situe dans une plage allant de 500.000 à 800.000, l'extrémité inférieure du profil de poids moléculaire dont le poids moléculaire moyen en poids (Mw) s'élève jusqu'à 150.000 étant limitée à un maximum de 6 % en poids de l'élastomère de styrène/butadiène ;
(2) de 60 à 10 phr d'au moins un élastomère supplémentaire à base d'un diène conjugué ;
(B) de 40 à 200 phr, en variante de 40 à 160 phr, d'une matière de charge qui comprend une combinaison de noir de carbone et de silice, de préférence de silice précipitée, de manière conjointe avec un agent de couplage qui possède une fraction qui réagit avec ou qui entre en interaction avec des groupes hydroxyle ou des groupes silanol sur ladite silice et une autre fraction différente qui réagit avec ou qui entre en interaction avec au moins un desdits élastomères à base de diènes ;
(C) de 5 à 70 phr d'une résine ; et
(D) de 9 à 55 phr, en variante de 15 à 55 phr, d'une huile plastifiante pour le caoutchouc qui comprend au moins une huile végétale à base de triglycérides.

2. Composition de caoutchouc selon la revendication 1, dans laquelle la matière de charge comprend de 10 à 99,5 % en poids de silice ou de silice précipitée et de 0,5 à 90 % en poids de noir de carbone.

3. Composition de caoutchouc selon la revendication 1 ou 2, dans laquelle la matière de charge comprend au moins 100 phr de silice ou de silice précipitée et/ou jusqu'à 15 phr ou moins de 8 phr de noir de carbone.

4. Composition de caoutchouc selon au moins une des revendications précédentes, dans laquelle le total de la résine et de l'huile plastifiante pour le caoutchouc est supérieur à 50 phr.

5. Composition de caoutchouc selon au moins une des revendications précédentes, qui contient de 9 à 40 phr de la résine et de 9 à 40 phr de l'huile plastifiante pour le caoutchouc et dans laquelle le total de la résine et de l'huile plastifiante pour le caoutchouc est de préférence inférieur à 50 phr.

6. Composition de caoutchouc selon au moins une des revendications précédentes, dans laquelle l'huile plastifiante pour le caoutchouc comprend une combinaison d'une huile végétale à base de triglycérides, librement ajoutée et d'au moins une huile plastifiante pour le caoutchouc qui est choisie parmi : une huile plastifiante pour le caoutchouc à base de pétrole librement ajoutée et un élastomère de styrène/butadiène spécialisé, allongé avec une huile plastifiante pour le caoutchouc à base de pétrole.

7. Composition de caoutchouc selon au moins une des revendications précédentes, dans laquelle l'huile végétale à base de triglycérides représente ou comprend au moins une huile qui est choisie parmi : de l'huile de soja, de l'huile de tournesol et de l'huile de colza.

8. Composition de caoutchouc selon au moins une des revendications précédentes, dans laquelle l'agent de couplage représente ou comprend un alcoxyorganomercaptosilane ou un bis(3-triéthoxysilylpropyl) polysulfure qui possède une moyenne de 2 à 4 atomes de soufre de liaison dans son pont polysulfure.

9. Composition de caoutchouc selon au moins une des revendications précédentes, dans laquelle on prévoit la silice et l'agent de couplage sous la forme d'un composite de la silice qui a été prétraitée avec l'agent de couplage avant son addition à la composition de caoutchouc ou dans laquelle on procure la silice et l'agent de couplage de manière conjointe avec la composition de caoutchouc afin d'obtenir une silice traitée in situ avec l'agent de couplage au sein de la composition de caoutchouc.

10. Composition de caoutchouc selon au moins une des revendications précédentes, dans laquelle l'élastomère supplémentaire à base d'un diène conjugué représente au moins un élastomère qui est choisi parmi: le 1,4-cis polybutadiène, le 1,4-cis polyisoprène, le 3,4-polyisoprène et un élastomère supplémentaire de styrène/butadiène autre que l'élastomère de styrène/butadiène qui possède ledit profil de poids moléculaire.

11. Composition de caoutchouc selon au moins une des revendications précédentes, dans laquelle l'élastomère de styrène/butadiène qui possède ledit profil de poids moléculaire est couplé à l'étain ou au silicium ou dans laquelle au moins un élastomère qui est choisi parmi : l'élastomère supplémentaire à base d'un diène conjugué et l'élastomère de styrène/butadiène qui possède ledit profil de poids moléculaire est couplé à l'étain ou au silicium.

12. Composition de caoutchouc selon au moins une des revendications précédentes, dans laquelle l'extrémité inférieure du profil de poids moléculaire dont le poids moléculaire moyen en poids (Mw) s'élève jusqu'à 150.000 est limitée à un maximum de 5,5 % en poids dudit élastomère de styrène/butadiène

13. Composition de caoutchouc selon au moins une des revendications précédentes, dans laquelle la résine représente ou comprend au moins une résine qui est choisie parmi : une résine de styrène-alphaméthylstyrène, une résine de coumarone-indène, une résine d'hydrocarbure de pétrole, une résine polymère de type terpénique, une résine à base de terpène-phénol, une résine qui dérive du colophane, y compris le colophane lui-même, ainsi que leurs copolymères, et une résine de phénol et de formaldéhyde, y compris un copolymère d'octylphénol et de formaldéhyde.

14. Composition de caoutchouc selon au moins une des revendications précédentes, dans laquelle la composition de caoutchouc est vulcanisée au soufre.

15. Bandage pneumatique qui possède un composant, de préférence une bande de roulement circonférentielle, le composant en question comprenant la composition de caoutchouc selon au moins une des revendications précédentes.
